Europäisches Patentamt

European Patent Office

Office européen des brevets

(19)

(11) Publication number: **0 016 537**
**B1**

(12) **EUROPEAN PATENT SPECIFICATION**

(45) Date of publication of patent specification: **02.11.83**

(51) Int. Cl.³: **H 02 M 3/335,** G 05 F 1/64

(21) Application number: **80300479.5**

(22) Date of filing: **20.02.80**

(54) **Regulated power supply with loss compensation.**

(30) Priority: **21.02.79 US 13355**

(43) Date of publication of application:
**01.10.80 Bulletin 80/20**

(45) Publication of the grant of the patent:
**02.11.83 Bulletin 83/44**

(84) Designated Contracting States:
**DE FR GB NL**

(56) References cited:
**EP - A - 0 002 975**
**DE - A - 2 361 924**
**FR - A - 1 404 991**
**US - A - 3 702 434**
**US - A - 4 034 280**
**US - A - 4 035 710**

(73) Proprietor: **SPERRY CORPORATION**
**1290, Avenue of the Americas**
**New York, N.Y. 10019 (US)**

(72) Inventor: **Shelly, Randolph David William**
**3150 Miller Avenue**
**Dorval Quebec H9P IK5 (CA)**

(74) Representative: **Michaels, Peter Albert**
**Sperry Univac Patent & Licensing Services M.S.**
**N1W4 Sperry Rand Ltd. Sperry Univac Centre**
**Brentfields**
**London NW10 8LS (GB)**

Courier Press, Leamington Spa, England.

Regulated power supply with loss compensation

This invention relates to electric power supplies.

Electric power supplies using inverters are known from the prior art and are described, for instance, in the journal Computer Design, July 1972, pages 55 to 65 in an article by S. Davis entitled "Power Supplies for Computers and Peripherals". In such inverter power supplies, a transformer is supplied via switching means which switch a filtered input DC current bidirectionally through an input winding of the transformer. The output voltage supplied to the load may be regulated by control circuits coupled to the output winding of the transformer.

Additionally, the output circuit of the transformer often contains current sensing circuitry to provide protection against short-circuit or overload arising from variations in loading. The article "Here Are More Protective Circuits" by A. Annunziato, on pages 64 to 67 of the journal Electronic Design 10, 13 May 1971, illustrates circuits of this kind, with particular reference to Figure 12 thereof.

One disadvantage of the prior art arrangements lies in the incomplete isolation of the sensing circuitry from the load. Another disadvantage inherent in the prior art arrangements is the required current or voltage feedback from the output side to the input side of the transformer (see "Monitor Both Voltage and Current Levels to Protect Your Power Supply and Load", by R. Mammano, Electronic Design 25, December 6, 1978, pages 96 to 103, and "Analog-Digital Transistor Switching Regulator Controller", by R. Calvo et al, I.B.M. Technical Disclosure Bulletin, Volume 17, No. 9, February 1976, pages 2666 to 2667).

US—A—3,702,434 discloses a power supply circuit including an inverter circuit comprising switching means to switch a primary direct current in alternate directions through an input winding of a transformer and current chopping means whose duty cycle controls the primary direct current and whose duty cycle is controlled by a voltage reference signal in combination with a control signal generated in a primary direct current sensing circuit. The circuit disclosed employs an over-voltage and overcurrent sensing circuit connected to a saturable reactor oscillator to drive the inverter switching transistors. The circuit operates to provide protection only against gross overloads, and cannot adjust to minor variations in the load.

The present invention provides an improved power supply according to the introductory portion of claim 1, in which the primary direct current sensing circuit comprises an impedance network in the primary direct current path, which is configured to simulate the loss characteristics in an output circuit of the transformer. In this way changing losses in the output circuit due to load variations can be compensated. The simulation is achieved by deriving the control signal from voltage drops which are caused by the primary direct current flowing through the impedance network.

For instance, if the output circuit of the transformer includes a converter circuit with non-linear impedances such as diodes, a corresponding non-linear impedance is included in the impedance network.

The present invention thus makes unnecessary, and avoids any problems arising from, a feedback connection from the output to the input of the inverter, and yet allows load sensitive control of the power supply operation.

Intervening EP—A1—2975 designating The Federal Republic of Germany, Great Britain and Italy also discloses an electric inverter power supply in which the control signal is derived from a circuit which simulates loss characteristics of the secondary side. However, unlike in the present invention where the impedance network lies in the primary direct current path, the simulating circuit of the intervening application is external to the primary direct current circuit, being coupled to the alternating current imput of the transformer of the inverter by a further transformer in series with it.

The present invention will be described further by way of example and with reference to the accompanying drawings in which:—

Figure 1 shows a partly schematic circuit diagram of an inverter power supply in accordance with the present invention.

Figure 2 is a timing diagram showing in simplified form the wave shapes associated with the inverter power supply of Figure 1.

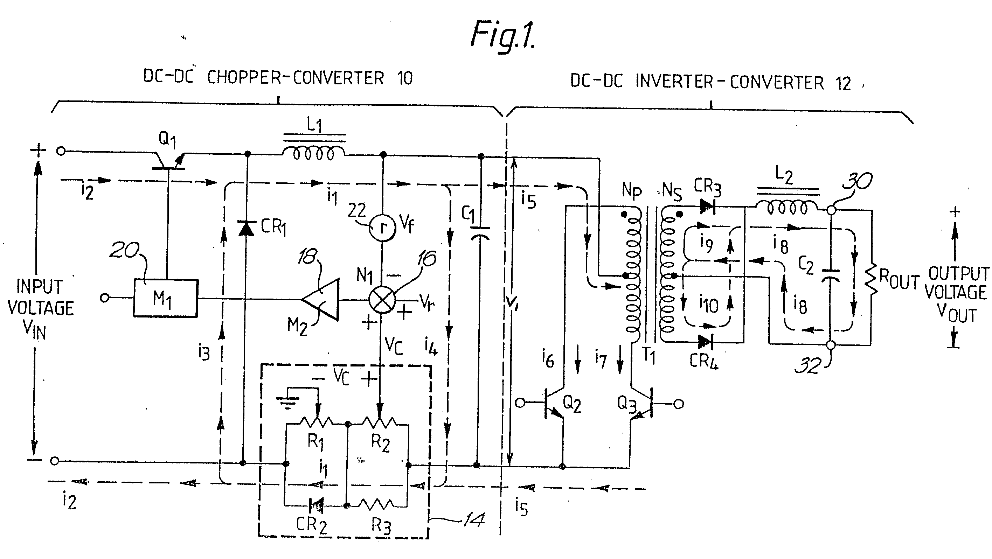

The power supply shown in Figure 1 is divided into two power sections: the first, a DC-DC Chopper-Converter 10, converts a high voltage unregulated DC voltage $V_{IN}$ to a lower voltage regulated DC; the second, a fixed duty cycle DC-DC Inverter-Converter 12, converts the regulated DC output from the chopper to a semi-regulated DC output, which in itself is not regulated with respect to load variations. A current sensing circuit 14 is provided on the input side of the coupling transformer $T_1$ thus obviating the need for a current or voltage feedback from the output side to the input side of the coupling transformer $T_1$.

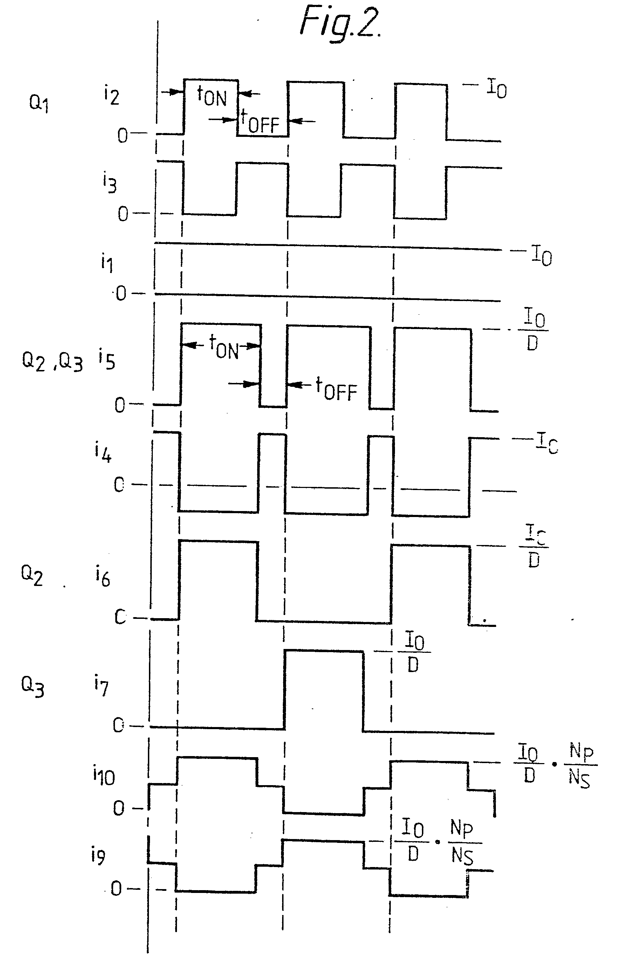

Referring also to the timing diagram of the current waveforms in Figure 2, the current $i_1$, flowing through inductor $L_1$, is of a constant DC level and is proportional to the output load current $i_8$ flowing through the output load represented by resistor $R_{OUT}$. The inductors $L_1$ and $L_2$ are made large enough for the currents flowing through them, $i_1$ and $i_8$, to be considered as being at constant DC levels or, in other words, for $L_1$ and $L_2$ to act as constant current sources.

Current sensing circuit 14, consisting of the bridge network of resistors $R_1$, $R_2$, $R_3$ and diode $CR_2$, is designed to simulate the losses that are encountered by the currents $i_9$ and $i_{10}$ which bi-directionally flow out of the ends of the centre tapped secondary winding of coupling transformer $T_1$ to flow through the load $R_{OUT}$,

$$i_8 = i_9 + i_{10}.$$

The currents $i_6$ and $i_7$ that flow through switching transistors $Q_2$ and $Q_3$, respectively, are also proportional to the currents $i_9$ and $i_{10}$, respectively,

$$i_5 = i_6 + i_7.$$

Resistor $R_3$ simulates resistive or linear losses while diode $CR_2$ simulates non-linear losses—such as those generated by output rectifier diodes CR3 and CR4. Resistors $R_1$ and $R_2$ are used to adjust the proportions of the signals that are fed back through summing network 16, operational amplifier 18 and constant-frequency pulse-width-modulation controller 20.

Controller 20, under control of the variable signals that are generated by current sensing circuit 14, pulse-width-modulates the signal that is coupled to the base of chopper transistor $Q_1$, the time ON, $t_{ON}$, and time OFF, $t_{OFF}$ of which, in turn determine variable duty cycle

$$D_{Q_1} = \frac{t_{ON}}{t_{ON} + t_{OFF}}$$

of the DC-DC Chopper-Converter 10.

In contrast, the (correspondingly defined) duty cycles for $Q_2$ and for $Q_3$ are constant, on account of the constant frequency and constant pulse-width of the switching signals that are coupled to the base electrodes of switching transistors $Q_2$ and $Q_3$ to generate the currents $i_6$ and $i_7$, which thus have constant frequency, constant pulse-width, but variable amplitude due to the variable duty cycle $D_{Q_1}$ of chopper transistor $Q_1$. The currents $i_6$ and $i_7$, in turn, provide the variable amplitude output current $i_8$, where

$$i_8 = i_9 + i_{10}.$$

The output current $i_8$ is of an amplitude that is a function of the turns ratio of the number of turns $N_P$ on the input side—primary winding—of coupling transformer $T_1$ to the number of turns $N_S$ on the output side-secondary winding—of coupling transformer $T_1$

$$\frac{N_P}{N_S}$$

and is a function of the variable duty cycle $D_{Q_1}$ of the chopper transistor $Q_1$ and the constant amplitude $I_0$ of the current $i_1$

$$\frac{I_0}{D}$$

$$i_8 = \frac{I_0}{D} \times \frac{N_P}{N_S}$$

In operation, the current $i_1$, as it passes through current sensing network 14, generates across resistor $R_3$ and diode $CR_2$ voltage signals that are proportional to the linear and non-linear losses, respectively, in the DC-DC Inverter-Converter 12, of current $i_8$. Resistors $R_1$ and $R_2$ adjust the relative proportions of those signals and the level of the resulting total signal is sufficiently low to be an insignificant proportion of the chopper voltage $v_1$ but a significant proportion of the total reference signal $v_r$. As the output current $i_8$ increases with an increase in the load $R_{OUT}$, the chopper current $i_1$ increases proportionately increasing the compensation signal $v_c$. The compensation signal $v_c$ is added to the reference signal $v_r$ causing the chopper output signal $v_1$ to increase sufficiently to offset the increased voltage drop losses developed in the DC-DC Inverter-Converter 12. Resistors $R_1$ and $R_2$ are adjusted such that the voltage appearing at the load (not necessarily the voltage at the power supply output at terminals 30 and 32) is regulated.

The compensation signal developed at $R_1$ and $R_2$ is of the form

$$v_c = r_x k_2 (1 - e^{-k_1 i_1}) + r_y R_3 i_1$$

where $r_x$ and $r_y$ are the adjustment ratios of resistors $R_1$ and $R_2$, respectively, and the constants $k_1$ and $k_2$ are positive constants. Operational amplifier 18 in combination with the summing network 16 is a compensated error amplifier. The pulse-width-modulated controller 20 is a circuit that converts an analogue DC signal to a rectangular wave, and is, in effect, a voltage-to-duty cycle converter.

As illustrated in Figure 2, switching transistors $Q_2$ and $Q_3$ are driven alternately from a fixed frequency, fixed duty cycle control circuit which also synchronizes the frequency of operation of pulse-width-modulation controller 20 for synchronizing the base drive of transistors $Q_1$, $Q_2$ and $Q_3$. With respect to the other elements of Figure 1: the function of operational amplifier 18 and node $N_1$ may be obtained by a 741 operational amplifier and a resistor-capacitor network; controller 20 could be made up of several digital ICs and a 555 timer, or, alternatively, the function of controller 20, operational amplifier 18 and node $N_1$ could be performed by a single regulating pulse-width-modulation controller IC such as the SG1524 Series; element 22 is the standard notation for a ratio device such as a resistor divider or potentiometer where $v_f$ is the feedback voltage ratioed down by element 22, i.e.,

$$v_f = rv_1.$$

## Claims

1. An electric power supply including an inverter circuit (T$_1$, Q$_2$, Q$_3$) comprising switching means (Q$_2$, Q$_3$) to switch a primary direct current (i$_1$) in alternate directions through an input winding of a transformer (T$_1$), and current chopping means (Q$_1$) whose duty cycle controls the primary direct current (i$_1$) and whose duty cycle is controlled by a voltage reference signal (v$_r$) in combination with a control signal (v$_c$) generated in a primary direct current sensing circuit (14), characterised in that the control signal (v$_c$) is derived from voltage drops caused by the primary direct current (i$_1$) flowing through an impedance network (14) which simulates loss characteristics in an output circuit of the transformer (T$_1$).

2. A power supply as claimed in claim 1, wherein the transformer output circuit includes a converter having unidirectional current devices (CR3, CR4) producing a known non-linear output impedance and the impedance network (14) includes non-linear impedance means (CR$_2$) simulating the non-linear output impedance.

3. A power supply as claimed in claim 1 or claim 2 wherein the impedance network comprises linear and non-linear impedances (R$_2$, R$_3$; and R$_1$, CR$_2$).

4. A power supply as claimed in any preceding claim in which the duty cycle of the chopping means (Q$_1$) is controlled by a pulse width modulator (M$_1$) having as an input an analogue DC signal derived from the sum of the reference signal (v$_r$) and the control signal (V$_c$).

## Patentansprüche

1. Elektrische Stromquelle mit einem Wechselrichterkreis (T$_1$, Q$_2$, Q$_3$), der Schaltmittel (Q$_2$, Q$_3$) zur Umschaltung eines über eine Eingangswicklung eines Transformators (T$_1$) geführten primären Gleichstromes (i$_1$) in abwechselnde Richtungen und einen Stromzerhacker (Q$_1$) enthält, dessen Arbeitszyklus von einem Spannungsbezugssignal (v$_r$) in Kombination mit einem von einer den primären Gleichstrom abfühlenden Schaltung (14) erzeugten Steuersignal (v$_c$) eingestellt wird und den primären Gleichstrom (i$_1$) beeinflußt, dadurch gekennzeichnet, daß das Steuersignal (v$_c$) aus dem Spannungsabfall abgeleitet wird, der durch den über ein Impedanznetzwerk (14) fließenden primären Gleichstrom (i$_1$) hervorgerufen wird, das die Verlustcharackteristiken in einem Ausgangskreis der Transformators (T$_1$) nachbildet.

2. Stromquelle, wie im Anspruch 1 beansprucht, bei der der Ausgangskreis der Transformators einen Wandler mit Gleichrichtern (CR3, CR4) aufweist, die eine bekannte, nichtlineare Ausgangsimpedanz bewirken, und das Impedanznetzwerk (14) eine nicthlineare Impedanz (CR2) enthält, die die nichtlineare Ausgangsimpedanz nachbildet.

3. Stromquelle, wie im Anspruch 1 oder Anspruch 2 beansprucht, bei der das Impedanznetzwerk lineare und nichtlineare Impedanzen (R2, R3 und R1, CR2) aufweist.

4. Stromquelle, wie in einem vorhergehenden Anspruch beansprucht, bei der der Arbeitszyklus des Zerhackers (Q$_1$) von einem Impulsbreiten-Modulator (M$_1$) eingestellt wird, an dessen Eingang ein analoges Gleichstromsignal erscheint, das aus der Summe des Bezugssignals (v$_r$) und des Steuersignals (v$_c$) abgeleitet wird.

## Revendications

1. Alimentation électrique incluant un circuit d'inversion (T$_1$, Q$_2$, Q$_3$) comprenant des moyens de commutation (Q$_2$, Q$_3$) pour commuter un courant continu primaire (i$_1$) suivant des directions opposées à travers l'enroulement d'entrée d'un transformateur (T$_1$) et des moyens de découpage de courant (Q$_1$) dont le cycle actif ou de travail commande le courant continu primaire (i$_1$) et dont le cycle de travail est commandé par un signal de référence (v$_r$) en combinaison avec un signal de commande (v$_c$) engendré dans un circuit de détection ou de mesure de courant continu primaire (14), caractérisée en ce que le signal de commande (v$_c$) provient des chutes de tension causées par le courant continu primaire (i$_1$) circulant dans un réseau d'impédance (14) qui simule les caractéristiques des pertes se produisant dans le circuit de sortie du transformateur (T$_1$).

2. Alimentation électrique selon la revendication 1, dans laquelle le circuit de sortie du transformateur contient un convertisseur ayant des dispositifs unidirectionnels (CR3, CR4) produisant une impédance de sortie non linéaire connus, et le réseau d'impédance (14) comporte des impédances non linéaires (CR$_2$) simulant l'impédance de sortie non linéaire.

3. Alimentation électrique selon la revendication 1 ou 2, dans laquelle le réseau d'impédance comprend des impédances linéaires et non linéaires (R$_2$, R$_3$; et R$_1$, CR$_2$).

4. Alimentation électrique selon l'une quelconque des revendications précédentes, dans laquelle le cycle de travail des moyens de découpage (Q$_1$) est commandé par un modulateur de largeur d'impulsion (M$_1$) dont l'entrée reçoit un signal continu analogique développé à partir de la somme du signal de référence (v$_r$) et du signal de commande (v$_c$).

*Fig.1.*

DC-DC CHOPPER-CONVERTER 10 | DC-DC INVERTER-CONVERTER 12

INPUT VOLTAGE $V_{IN}$

OUTPUT VOLTAGE $V_{OUT}$

$R_{OUT}$

$L_1$, $L_2$, $C_1$, $C_2$

$Q_1$, $Q_2$, $Q_3$

$M_1$, $M_2$

$CR_1$, $CR_2$, $CR_3$, $CR_4$

$R_1$, $R_2$, $R_3$

$N_P$, $N_S$, $N_1$

$T_1$

$V_f$, $V_r$, $V_C$, $V_1$

$i_1$, $i_2$, $i_3$, $i_4$, $i_5$, $i_6$, $i_7$, $i_8$, $i_9$, $i_{10}$

14, 16, 18, 20, 22, 30, 32

1

# Fig.2.